# EUROPÄISCHE PATENTSCHRIFT

(11) **EP 3 521 778 B1**
(45) Veröffentlichungstag und Bekanntmachung des Hinweises auf die Patenterteilung: **17.11.2021**
(21) Anmeldenummer: 18155433.8
(22) Anmeldetag: 06.02.2018
(51) Int. Cl.: G01F 23/26

(54) **IMPEDANZSENSOR UND VERFAHREN ZU DESSEN BETRIEB**
IMPEDANCE SENSOR AND METHOD FOR ITS OPERATION
CAPTEUR D'IMPÉDANCE ET SON PROCÉDÉ DE FONCTIONNEMENT

(43) Veröffentlichungstag der Anmeldung: 07.08.2019
(73) Patentinhaber: VEGA Grieshaber KG, 77709 Wolfach (DE)
(72) Erfinder: Weinzierle, Christian, 77709 Wolfach-Kirnbach (DE); Grießbaum, Karl, 77796 Mühlenbach (DE); Haas, Jürgen, 77709 Oberwolfach (DE)
(74) Vertreter: Patentanwälte Bauer Vorberg Kayser

(56) Entgegenhaltungen:
- EP-A2- 2 469 246
- WO-A1-2010/077893
- DE-A1-102010 030 791
- US-A- 4 434 657
- US-A1- 2012 290 227

## Beschreibung

Die vorliegende Erfindung betrifft einen Impedanzsensor gemäß dem Oberbegriff des Patentanspruchs 1 sowie ein Verfahren gemäß dem Patentanspruch 9. Impedanzsensoren dieser Art sind aus dem Stand der Technik, bspw. zur Messung von Grenz- oder Füllständen bekannt. Typische Anwendungen für die Erfassung einer vordefinierten Füllhöhe sind Prozessbehältnisse, wie beispielsweise Prozesstanks, Lagertanks, Silos oder Rohrleitungen in der Prozessindustrie. Impedanzsensoren werden dabei häufig als sog. Grenzschalter, d.h. zur Bestimmung, ob ein Füllmedium eine bestimmte Füllhöhe, den sog. Grenzstand, über- oder unterschreitet, in unterschiedlichen Flüssigkeiten, sowie granulierten und pulverförmigen Schüttgütern eingesetzt.

Es sind auch andere Arten von Grenzschaltern bekannt, die je nach Einsatzgebiet, Prozessbedingungen und Eigenschaften des Füllmediums ausgewählt werden. Neben Impedanzsensoren kommen Sensoren, die nach dem TDR (Time Domain Reflectomety) Prinzip arbeiten, oder Vibrationsgrenzstandsensoren oder kapazitiv arbeitende Sensoren zum Einsatz. Ein Schaltbefehl des Grenzschalters kann beispielsweise Befülleinrichtungen oder Entleereinrichtungen starten oder stoppen um entsprechend ein Überlaufen oder Leerlaufen des jeweiligen Prozessbehältnisses zu vermeiden.

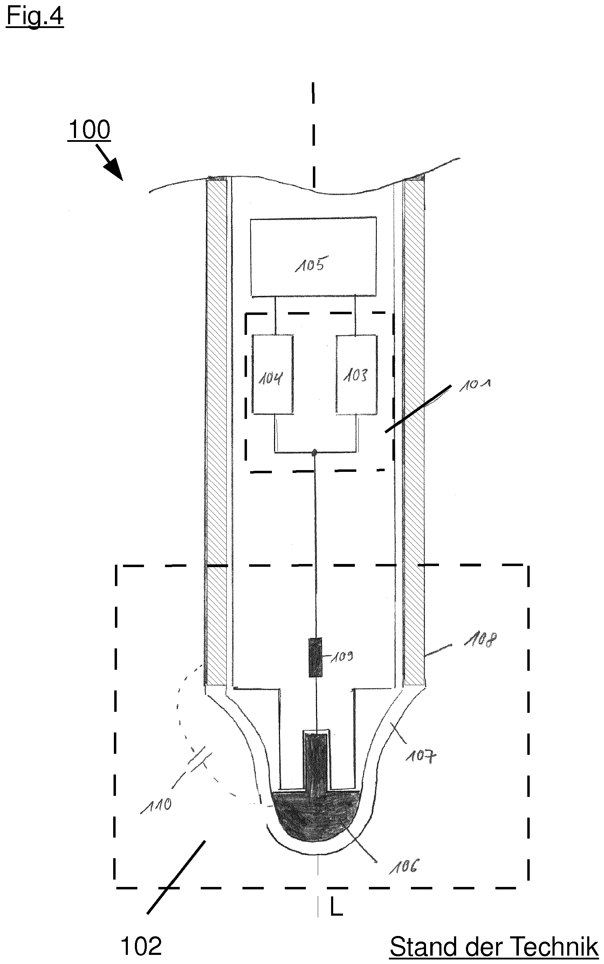

Ein bekannter Impedanzsensor 100 ist in Figur 4 gezeigt. Figur 4 zeigt ein vereinfachtes Blockschaltbild eines Impedanzsensors 4 gemäß dem Stand der Technik. Im Wesentlichen besteht der Impedanzsensor 100, nachfolgend auch Grenz standsensor genannt, gemäß dem Stand der Technik aus einer Elektronikeinheit 101 und einer Messsonde 102. Die Messsonde 102 ist im vorliegenden Ausführungsbeispiel als Serienschwingkreis aufgebaut. Zwischen einer Messelektrode 106 und einer Bezugselektrode 108 bildet sich eine Messkapazität 110 aus, welche mit einer diskreten Induktivität 109 zu dem als Serienschwingkreis ausgebildeten Messschwingkreis verschaltet ist.

Die Messelektrode 106 ist rotationssymmetrisch zu einer Längsachse L des Impedanzsensors 100 ausgebildet und über einer Isolierung 107 von einem Prozessraum getrennt. Vorteilhafterweise wird die diskrete Induktivität 109 so gewählt, dass sich eine Resonanzfrequenz des Schwingkreises für unterschiedlichste Medien bzw. Bedeckungszustände (leer, voll und verschmutzt) zwischen 100 MHz und 200 MHz einstellt.

Ein Betrag einer sich über die Frequenz ändernden komplexwertigen Impedanz |Z| dieses Messschwingkreises wird vorteilhafterweise zwischen 100 MHz und 200 MHz analysiert, d.h. der Messschwingkreis wird mittels eines Frequenzgenerators 103 mit einem Frequenzsweep mit Frequenzen zwischen 100 MHz und 200 MHz angeregt und eine Frequenzantwort des Messschwingkreises mit einem Frequenzdetektor 104 detektiert. Befindet sich ein Medium im Bereich der Messsonde 102, ändert sich das Impedanzverhalten des Messschwingkreises.

Unter einem Frequenzsweep wird die sequenzielle Anregung mit einer Mehrzahl von aufeinander folgenden Frequenzen innerhalb eines Frequenzbereichs verstanden, wobei der Frequenzbereich idealerweise sämtliche möglichen Resonanzfrequenzen des Messschwingkreises enthalten sollte.

Die Änderung der Impedanz des Messschwingkreises wird für eine Auswertung in einer Auswerte- und Steuereinheit 105 herangezogen. Konkret wird die Frequenzantwort hinsichtlich einer Frequenzänderung Δf und einer Änderung der Amplitude eines Minimums der Impedanz ΔZ, auch als Amplitudenänderung bezeichnet, ausgewertet und daraus ein Schaltbefehl generiert.

Die Impedanzsensoren gemäß dem Stand der Technik werden bei Prozesstemperaturen zwischen -40°C und +115°C eingesetzt. Diese Temperaturunterschiede haben einen starken Einfluss auf das Verhalten des Frequenzgenerators 103 und des Frequenzdetektors 104, sodass es zu Messfehlern und damit zu falschen Schaltbefehlen kommen kann. Dies wird als Nachteil des Standes der Technik empfunden.

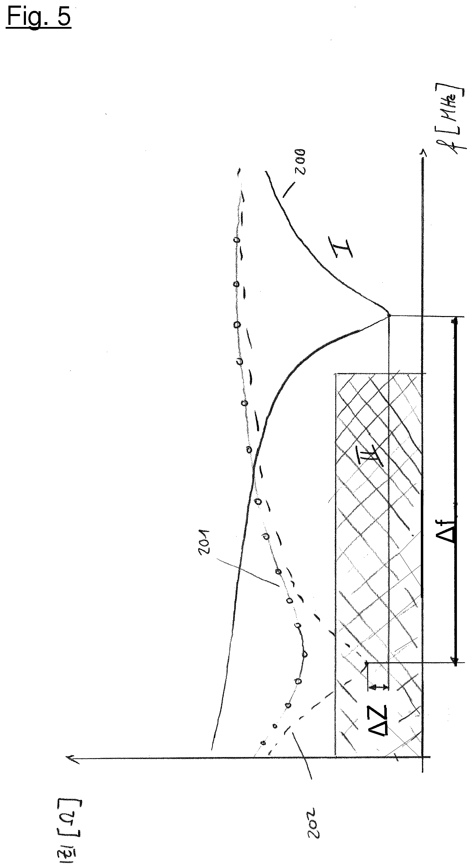

In Figur 5 sind beispielhaft für das Medium Ketchup die Frequenzantworten des Impedanzsensors 100 nach dem Stand der Technik aufgeführt.

Die Kurve 200 zeigt das Resonanzverhalten einer sauberen Messsonde 102. Dargestellt ist der Betrag der Impedanz Z über der Frequenz f.

Das Verhalten einer mit Anhaftungen von Ketchup verschmutzten Messsonde 102 ist in Kurve 201 und das einer komplett mit Ketchup bedeckten Messsonde 102 in der Kurve 202 gezeigt.

Schaltbefehle (leer, voll) werden von der Auswerte- und Steuereinheit 105 realisiert, wobei gemäß dem Stand der Technik ausschließlich die Minima der Resonanzkurven für die Auswertung herangezogen werden. Diese werden bezüglich einer Frequenzänderung Δf und Amplitudenänderung ΔZ ausgewertet. Befindet sich das Minimum der Resonanzkurve im Bereich I, so gibt die Auswerte- und Steuereinheit 105 den Schaltbefehl "leer" aus. Befindet sich das Minimum jedoch im Bereich II so wird der Schaltbefehl "voll" ausgegeben. Die beiden definierten Schaltbereiche I, II können ab Werk fest in den Impedanzsensor 100 einprogrammiert oder durch einen Kundenabgleich eingestellt und verändert werden. Idealerweise sollten die Bereiche so definiert werden, dass für möglichst viele unterschiedliche Medien die Standardeinstellungen ausreichend sind, da ein kundenseitiger Abgleich zeitaufwendig und daher unerwünscht ist.

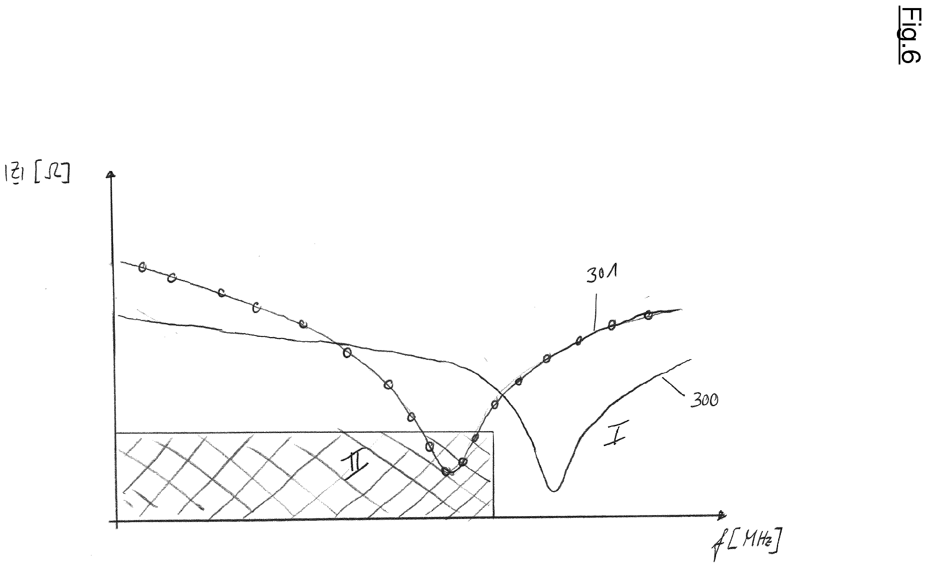

Die Grenzstandsensoren 100 werden bei Prozesstemperaturen zwischen -40°C und +115°C eingesetzt. Dies hat zur Folge, dass die Elektronikeinheit 101 des Impedanzsensors 100 relativ hohen Temperaturschwankungen ausgesetzt ist. In Figur 6 sind zwei Resonanzkurven des Impedanzsensors 100 in unbedecktem Zustand der Messsonde 102 dargestellt, wobei die Kurve 300 das Verhalten bei +25°C und die Kurve 301 das Verhalten bei +115°C beschreiben. Wie aus Figur 6 ersichtlich ist, liegt das Minimum der Kurve 300 bei 25°C in Bereich I und das Minimum der Kurve 301 bei 115°C in Bereich II, was unterschiedlichen Schaltzuständen des Impedanzsensors 100 entspricht. Auf Grund einer Temperaturabhängigkeit der Elektronikeinheit 101 können Temperatureinflüsse damit zu falschen Schaltentscheidungen des Grenzstandsensors 100 kommen.

Als weiterer Stand der Technik werden die WO 2010/077 893 A1, die US 4,434,657 A und die EP 2 469 246 A genannt.

Hier setzt die vorliegende Erfindung an.

Es ist die Aufgabe der vorliegenden Erfindung, einen Impedanzsensor, insbesondere einen Impedanzgrezschalter, mit einer verringerten Temperaturabhängigkeit zur Verfügung zu stellen. Diese Aufgabe wird durch einen Impedanzsensor mit den Merkmalen des Patentanspruchs 1 und ein Verfahren mit den Merkmalen des Patentanspruchs 9 gelöst. Vorteilhafte Weiterbildungen sind in abhängigen Patentansprüchen wiedergegeben.

Ein erfindungsgemäßer Impedanzsensor mit einer Messsonde, die durch ein die Sonde umgebendes Medium in einer Kapazität beeinflussbar ist, einem Messschwingkreis, in dem die Messsonde als kapazitätsbestimmendes Element angeordnet ist, einer Elektronikeinheit mit einem Signalgenerator zur Anregung des Schwingkreises und einem Signaldetektor zur Ermittlung eins Antwortsignals des Messschwingkreises, einer Signalverarbeitungseinheit, die mit der Elektronikeinheit verbunden ist und einer Referenzschaltung zeichnet sich dadurch aus, dass die Elektronikeinheit wechselweise mit dem Messschwingkreis oder der Referenzschaltung verbindbar ist.

Dadurch, dass die Elektronikeinheit über bspw. einen Umschalter wechselweise mit dem Messschwingkreis oder der Referenzschaltung verbindbar ist, kann das ausgeprägte Temperaturverhalten der Elektronikeinheit durch eine Umschaltung auf den Referenzkanal ermittelt und kompensiert werden, sodass eine sichere und zuverlässige Grenzstandbestimmung möglich ist. Ferner können durch die Umschaltung auf die Referenzschaltungzeitintensive Einlernphasen entfallen und es wird die Messsicherheit deutlich erhöht.

Ferner wird durch eine entsprechende Referenzschaltung neben einer Temperaturkompensation auch eine Überprüfung der Elektronikeinheit möglich. Es kann damit die grundsätzliche Funktionsfähigkeit von Signalgenerator und Signaldetektor überprüft werden.

Der Messschwingkreis kann vorteilhafterweise als Serienschwingkreis aus der Messsonde und einer diskreten Induktivität aufgebaut sein. Je nachdem für welche Medien die Messanordnung geeignet sein soll, können die Messsonde und die Induktivität so aufeinander abgestimmt werden, dass eine Resonanzfrequenz des Messschwingkreises sowohl bei unbedeckter als auch bei mit Medium bedeckter Messsonde in einem Bereich von 100 MHz bis 200 MHz liegt.

Um eine optimale Kompensation des Temperaturgangs der Elektronikeinheit zu gewährleisten, ist die Referenzschaltung erfindungsgemäß als temperaturstabiler Referenzschwingkreis ausgebildet. Der Referenzschwingkreis kann diskret aufgebaut sein und eine feste Resonanzfrequenz aufweisen, sodass bekannt ist, bei welcher Frequenz das Minimum der Frequenzantwort des Referenzschwingkreises liegt. Ausgehend von diesem Minimum kann eine Kompensation der Temperaturabhängigkeit des Messschwingkreises erfolgen. Im einfachsten Fall wird für die Referenzschaltung ein Frequenzoffset zwischen dem ermittelten und dem hinterlegten Minimum bestimmt und das Messergebnis des Messschwingkreises um diesen Frequenzoffset korrigiert.

Das gleiche kann für einen Amplitudenoffset erfolgen.

In einer Weiterbildung weist der Referenzschwingkreis eine einstellbare Resonanzfrequenz auf. Auf diese Weise kann auch eine Frequenzabhängigkeit der Temperaturabhängigkeit kompensiert werden. Es kann so beispielsweise die Lage des Minimums der Frequenzantwort der Referenzschaltung für eine Vielzahl von Resonanzfrequenzen ermittelt und so eine an die aktuelle Resonanzfrequenz des Messschwingkreises angepasste Kompensation der Temperaturabhängigkeit erfolgen.

In einer besonders einfachen Ausgestaltung einer Variante mit fester Resonanzfrequenz der Referenzschaltung weiset der Referenzschwingkreis eine Induktivität auf, die der diskreten Induktivität des Messschwingkreises entspricht. Durch diese Maßnahme muss für den Aufbau der Messanordnung lediglich eine Sorte von diskreten Induktivitäten vorgehalten werden.

Ein einfaches umschalten zwischen dem Messschwingkreis und der Referenzschaltung ist über eine Schaltvorrichtung möglich. Die Schaltvorrichtung kann die Umschaltung elektronisch oder mechanisch realisieren, sodass die Elektronikeinheit leitend mit der Referenzschaltung oder dem Messschwingkreis verbindbar ist. In einer einfachen Ausgestaltung ist die Schaltvorrichtung als HF-Umschalter ausgebildet. Solche HF-Umschalter sind kommerziell erhältlich, sodass hier kein zusätzlicher Designaufwand für eine Eigenentwicklung der Schaltvorrichtung aufgebracht werden muss.

Vorzugsweise ist die Elektronikeinheit mit einer Kompensationseinheit verbunden, die zyklisch die Referenzschaltung mit der Elektronikeinheit verbindet und eine Kompensation eines Temperaturgangs der Elektronikeinheit vornimmt. Die Kompensationseinheit kann separat ausgebildet oder in eine Auswerteund Steuereinheit, mit der die Elektronikeinheit verbunden sein kann, integriert sein.

Um eine besonders gute Kompensation zu erreichen sollte die Referenzschaltung eine Resonanzfrequenz in einem Arbeitsbereich des Messschwingkreises aufweisen. Der Arbeitsbereich des Messschwingkreises wird durch eine minimale und eine maximale Resonanzfrequenz des Messschwingkreises bei Medien mit minimal und maximal zulässiger relativer Dielektrizitätszahl sowie bei minimal und maximal zulässiger Temperatur begrenzt. Eine hinreichende Kompensation wird auch noch erreicht, wenn dieser Arbeitsbereich um 10 MHz über- bzw. unterschritten wird.

Ein erfindungsgemäßes Verfahren zum Betreiben eines Impedanzsensors gemäß der obigen Beschreibung weist folgende Schritte auf:
i) Anregen einer Referenzschaltung und Detektieren einer Frequenzantwort
ii) Vergleichen der Frequenzantwort der Referenzschaltung mit einer abgespeicherten Frequenzantwort und Ermittelten eines Offsets
iii) Anregen eines Messschwingkreises und Detektieren einer Frequenzantwort
iv) Kompensieren der Frequenzantwort des Messschwingkreises um den ermittelten Offset.

Je nach Anwendungsfall ist Schritt i) wenigstens einmal pro Minute, vorzugsweise, wenigstens einmal pro 10 Sekunden, weiter vorzugsweis wenigstens einmal pro Sekunde und weiter bevorzugt jedes Mal vor Schritt iii) durchzuführen. Die vorstehenden Zeitabschnitte sind dabei entsprechend der erwarteten Änderungsgeschwindigkeit der Prozesstemperatur auszuwählen. Werden nur sehr langsame Temperaturänderungen erwartet, ist ein Ermittlung des Offsets mittels der Referenzschaltung einmal pro Minute ausreichend. Je schneller die erwarteten Temperaturänderungen erfolgen, desto kürzer ist das Intervall zwischen einzelnen Ermittlungen des Offsets zu wählen, wobei für eine Temperaturschockkompensation eine Ermittlung des Offsets vor jeder Messung vorteilhaft ist. Auf diese Weise kann jede Messung mit einem unmittelbar vor der Messung ermittelten Offset korrigiert werden.

Eine optimale Ermittlung des Offsets ist möglich, wenn in Schritt i) das Anregen der Referenzschaltung mit einem Frequenzsweep über einen Messbereich des Messschwingkreises erfolgt. Unter einem Frequenzsweep wird vorliegend die sequenzieile Anregung mit einer Mehrzahl von aufeinander folgenden Frequenzen innerhalb eines Frequenzbereichs verstanden, wobei der Frequenzbereich dem Messbereich des Messschwingkreises entspricht, der idealerweise sämtliche möglichen Resonanzfrequenzen des Messschwingkreises bei sämtlichen zulässigen Medien und Temperaturen enthalten sollte. Ein solcher Frequenzsweep kann mit Schrittwerten von beispielsweise 0,1 - 2 MHz, vorteilhafterweise 0,2 - 1 MHz, weiter bevorzugt mit einem Schrittwert von 0,25 MHz erfolgen.

In einer Weiterbildung des Verfahrens umfasst Schritt i) das Verstimmen der Referenzschaltung von einer unteren möglichen Messfrequenz bis zu einer oberen möglichen Messfrequenz sowie das Detektieren eines frequenzabhängigen Offsets. Weist die Referenzschaltung eine einstellbare Resonanzfrequenz auf, so kann diese schrittweise verstellt und anschließend mittels einer Referenzmessung die Frequenzantwort bei der jeweiligen Frequenz ermittelt werden. Auf diese Weise kann eine Frequenzabhängigkeit der Temperaturabhängigkeit der Frequenzantwort ermittelt und kompensiert werden. Eine solche Vorgehensweise kann bei Messungen für Medien mit einer sehr niedrigen relativen Dielektrizitätszahl von Vorteil sein.

Eine besonders gute Kompensation wird erreicht, wenn Schritt i) das Ermitteln eines Frequenzoffsets und eines Amplitudenoffsets der Frequenzantwort umfasst.

Die vorliegende Erfindung wird nachfolgend anhand von Ausführungsbeispielen unter Bezugnahme auf die beigefügten Figuren eingehend erläutert. Es zeigen:
- Figur 1: ein Blockschaltbild eines Impedanzsensors gemäß der vorliegenden Anmeldung,
- Figur 2 a)-d): verschiedene Ausgestaltungsmöglichkeiten einer Referenzschaltung, wie sie in Fig. 1 eingesetzt wird,
- Figur 3: ein Ablaufdiagramm eins Verfahrens zum Betreiben des Impedanzsensors gemäß Fig. 1
- Figur 4: ein Blockschaltbild eines Impedanzsensors gemäß dem Stand der Technik (schon behandelt),
- Figur 5: Messkurven der Frequenzantwort bei mit Medium unbedecktem, verschmutztem und bedecktem Impedanzsensor und
- Figur 6: Messkurven eines unbedeckten Impedanzsensors gemäß dem Stand der Technik bei unterschiedlichen Temperaturen.

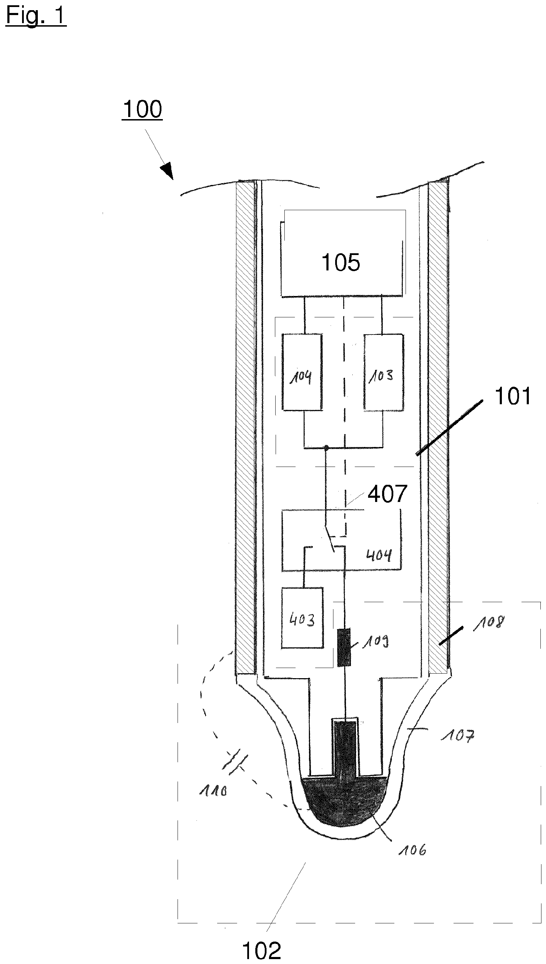

Figur 1 zeigt ein vereinfachtes Blockschaltbild eines Impedanzsensors 100 gemäß der vorliegenden Anmeldung.

Der Impedanzsensor 100 ist, wie aus dem Stand der Technik bekannt mit einer als Messschwingkreis ausgebildeten Messsonde 102 aufgebaut. Der Messschwingkreis ist als Serienschwingkreis aus einer zwischen einer als Gehäuse ausgebildeten Referenzelektrode 108 und einer Messelektrode 106 ausgebildeten Messkapazität 110 und einer in Serie zu dieser geschalteten diskreten Induktivität 109 gebildet. Der Messschwingkreis ist über eine Schalteinrichtung 404 mit einer Elektronikeinheit 101 mit einem Frequenzgenerator 103 und einem Frequenzdetektor 104 verbindbar, sodass der Messschwingkreis durch den Frequenzgenerator 103 mit einer Wechselspannung anregbar ist.

Mittels des Frequenzdetektors 104 wird eine Frequenzantwort des Messschwingkreises ermittelt.

Das Messprinzip entspricht insoweit dem oben erläuterten Messprinzip aus dem Stand der Technik.

Die Elektronikeinheit 101 ist über die Schalteinrichtung 404, die im vorliegenden Ausführungsbeispiel als Hochfrequenz-Umschalter ausgebildet ist, entweder mit dem der Messsonde 102 zur Durchführung einer Messung oder einer Referenzschaltung 403 zur Durchführung einer Referenzmessung verbindbar. Die Referenzschaltung weist - wie der Messschwingkreis auch - eine komplexwertige Impedanz auf, wobei die Referenzschaltung 403 so ausgelegt ist, dass ihre Impedanz in einem Messbereich des Messschwingkreises, uns insbesondere in einem Bereich zwischen 100 MHz und 200 MHz liegt.

Eine Ansteuerung der Umschalteinrichtung erfolgt im vorliegenden Ausführungsbeispiel durch die Auswerte- und Steuereinheit 105, die über einer Steuerleitung 407 mit dem HF-Umschalter verbunden ist.

Durch ein Verbinden der Elektronikeinheit 101 mit der Referenzschaltung 403 kann, wenn eine Frequenzantwort der Referenzschaltung bei einer vorgegebenen Temperatur bekannt ist, durch einen Vergleich einer ermittelten Frequenzantwort mit der bekannten Frequenzantwort eine Kompensation eines Temperaturganges der Elektronikeinheit 101 erfolgen.

Im vorliegenden Ausführungsbeispiel erfolgt diese Kompensation in der Auswerte- und Steuereinheit 105. Im vorliegenden Fall wird ein Amplitudenminimum der Frequenzantwort der Referenzschaltung 403 hinsichtlich seiner Amplitude |Z| und der Frequenz f, bei der das Minimum auftritt ausgewertet und ausgehend hiervon eine Frequenzänderung Δf und eine Änderung der Amplitude der Impedanz Δ|Z| zu abgespeicherten Werten von Amplitude und Frequenz f berechnet. Zur Kompensation kann dann ein nachfolgender Messwert um diese Frequenzänderung Δf und Amplitudenänderung Δ|Z| korrigiert und somit ein Temperaturgang der Elektronikeinheit 101 kompensiert werden.

Es sei an dieser Stelle angemerkt, dass eine Kompensation auch lediglich in Hinblick auf eine Frequenzänderung Δf erfolgen kann. Im einfachsten Fall kann eine solche Ausgestaltung ausreichend sein.

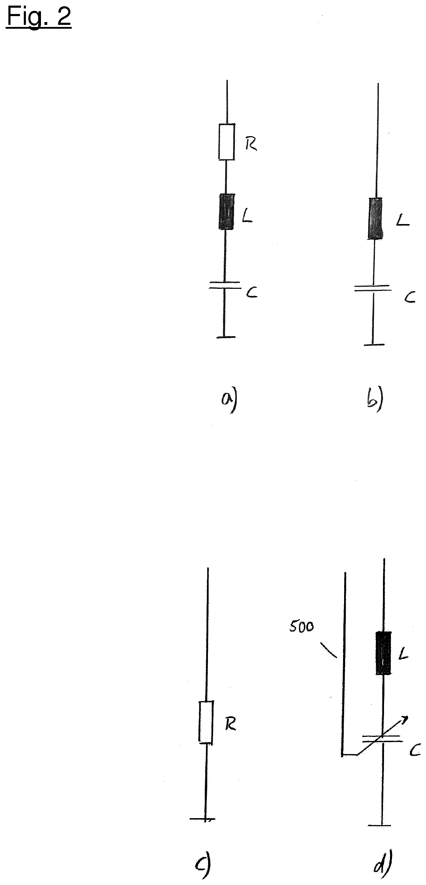

Grundsätzlich kann die Referenzschaltung 403 allgemein als temperaturstabile, komplexe Impedanz ausgebildet sein. In Figur 2 sind verschiedene Ausgestaltungsmöglichkeiten für die Referenzschaltung 403 dargestellt.

Figur 2 a) zeigt einen Serienschwingkreis, bestehend aus einem Widerstand R, einer Induktivität L und einer Kapazität C. Dieser Schwingkreis besitzt eine Resonanzfrequenz, welche über die Induktivität L und die Kapazität C fest eingestellt werden kann. Dabei ist es vorteilhaft wenn die Resonanzfrequenz im Arbeitsbereich des Messschwingkreises 102 liegt. Dies ist möglich, da die Referenzschaltung 403 unabhängig vom Messschwingkreis arbeitet.

In Figur 2 b) ist eine zweite Ausfügungsform der Referenzschaltung 403 gezeigt. Die Referenzschaltung 403 besteht dort nur aus einer Induktivität L und einer Kapazität C.

Eine nicht erfindungsgemäße Alternative ist in Figur 2 c) dargestellt, in der die Referenzschaltung nicht als Schwingkreis sondern lediglich als Widerstand R ausgebildet ist.

Eine vierte Möglichkeit zur Implementierung der Referenzschaltung 403 ist in Figur 2 d) gezeigt. Hier ist die Referenzschaltung 403 als veränderbarer Schwingkreis ausgebildet, wobei in dem gezeigten Ausführungsbeispiel der Schwingkreis als Serienschwingkreis mit einer veränderbaren Kapazität C ausgebildet ist. Die veränderbare Kapazität C ist über eine zusätzliche Steuerleitung 500 mit der Auswerte- und Steuereinheit 105 verbunden, die eine Anpassung der Resonanzfrequenz der Referenzschaltung 403 vornimmt. Mit einer einstellbaren Resonanzfrequenz könnte beispielsweise der gesamte Arbeitsfrequenzbereich des Messschwingkreises 102 abgefahren und somit das Temperaturverhalten der Elektronikeinheit 101 über das gesamte Frequenzband korrigiert werden.

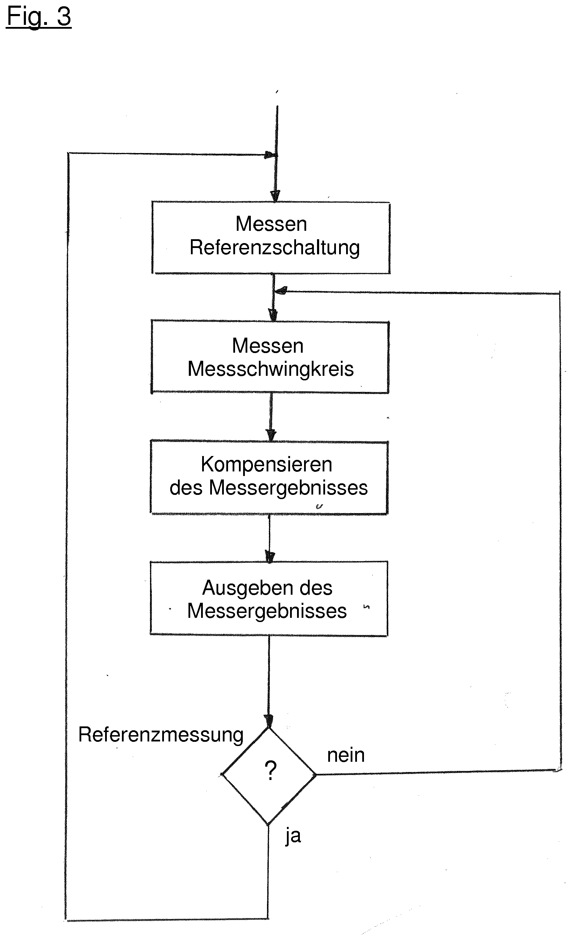

In Figur 3 ist ein vereinfachtes Ablaufdiagramm eines Verfahrens zum Betreiben eins Impedanzsensors 100 gemäß der vorliegenden Anmeldung dargestellt.

Im laufenden Betrieb wird zunächst eine Referenzmessung durchgeführt, d.h. dass die Elektronikeinheit 101 mit der Referenzschaltung 403 verbunden und diese über den Frequenzgenerator 103 mit einem Frequenzsweep angeregt wird. Mittels des Frequenzdetektors 104 wird die Frequenzantwort der Referenzschaltung 403 ermittelt und in der Auswertet- und Steuereinheit 402 eine Frequenzänderung Δf sowie optional eine Amplitudenänderung Δ|Z| relativ zu einem hinterlegte Wert bestimmt und als Korrekturparameter gespeichert.

Es sei an dieser Stelle angemerkt, dass die Frequenzänderung Δf sowie die Amplitudenänderung Δ|Z| sowohl nur für das Amplitudenminimum als auch für die gesamte Frequenzantwort bestimmt werden kann.

Anschließend wird die Referenzschaltung 403 wieder deaktiviert und die Elektronikeinheit 101 mit dem Messschwingkreis verbunden. Nun wird das Impedanzverhalten der Messsonde 102 gemessen und anschließend das Resonanzverhalten mit den Korrekturparametern korrigiert.

Aus der korrigierten Frequenzantwort wird anschließend ein Schaltbefehl (unbedeckt oder bedeckt) ermittelt und für eine Weiterverarbeitung ausgegeben.

Die Vermessung des Referenzkanals 403 wird nur zu bestimmten Zeitpunkten bzw. in diskreten Zeitabständen durchgeführt. Um auch schnelle Temperaturveränderungen und deren Auswirkungen erfassen zu können ist es vorteilhaft, wenn vor jeder Messung eine Referenzmessung durchgeführt und anschließend die Messung mit den unmittelbar zuvor ermittelten Korrekturparametern korrigiert wird.

### Bezugszeichenliste

- 100: Impedanzsensor /Impedanzgrenzschalter
- 101: Elektronikeinheit
- 102: Messsonde
- 103: Frequenzgenerator
- 104: Frequenzdetektor
- 105: Auswerte- und Steuereinheit
- 106: Messelektrode
- 107: Isolierung
- 108: Gegenelektrode
- 109: Induktivität
- 110: Messkapazität

- 200: Frequenzantwort leer
- 201: Frequenzantwort verschmutzt
- 202: Frequenzantwort voll

- 300: Frequenzantwort 25°C
- 301: Frequenzantwort 115°C

- 403: Referenzschaltung / Referenzschwingkreis
- 404: Schalteinrichtung / HF-Umschalter
- 407: Steuerleitung

- C: Kapazität
- L: Induktivität
- R: Widerstand
- Z: Impedanz

- F: Frequenz
- Δf: Frequenzänderung
- ΔZ: Impedanzänderung/Amplitudenänderung
- I: erster Bereich
- II: zweiter Bereich

## Patentansprüche

1. Impedanzsensor (100) mit
- einer Messsonde (102), die durch ein die Messsonde (102) umgebendes Medium in einer Kapazität beeinflussbar ist,
- einem Messschwingkreis, in dem die Messsonde (102) als kapazitätsbestimmendes Element angeordnet ist,
- einer Elektronikeinheit (101) mit einem Signalgenerator (103) zur Anregung des Messschwingkreises und einem Signaldetektor (104) zur Ermittlung eins Antwortsignals des Messschwingkreises,
- einer Signalverarbeitungseinheit (105), die mit der Elektronikeinheit (101) verbunden ist und
- einer Referenzschaltung,
**dadurch gekennzeichnet, dass** die Elektronikeinheit (101) wechselweise mit dem Messschwingkreis oder der Referenzschaltung verbindbar ist, wobei die Referenzschaltung als temperaturstabiler Referenzschwingkreis (403) ausgebildet ist.

2. Impedanzsensor (100) gemäß Anspruch 1,
**dadurch gekennzeichnet, dass** der Messschwingkreis als Serienschwingkreis aus der Messsonde (102) und einer diskreten Induktivität (109) aufgebaut ist.

3. Impedanzsensor (100) gemäß Anspruch 2,
**dadurch gekennzeichnet, dass** der Referenzschwingkreis (403) eine einstellbare Resonanzfrequenz aufweist.

4. Impedanzsensor (100) gemäß einem der vorhergehenden Ansprüche,
**dadurch gekennzeichnet, dass** der Referenzschwingkreis (403) eine Induktivität (109) aufweist, die der des Messschwingkreises entspricht.

5. Impedanzsensor (100) gemäß einem der vorhergehenden Ansprüche,
**dadurch gekennzeichnet, dass** die Elektronikeinheit (101) über eine Schaltvorrichtung (404) entweder mit dem Messschwingkreis oder dem Referenzschwingkreis (403) verbindbar ist.

6. Impedanzsensor (100) gemäß Anspruch 5,
**dadurch gekennzeichnet, dass** die Schaltvorrichtung (404) als HF-Umschalter (404) ausgebildet ist.

7. Impedanzsensor (100) gemäß einem der vorhergehenden Ansprüche,
**dadurch gekennzeichnet, dass** die Elektronikeinheit (101) mit einer Kompensationseinheit verbunden ist, die zyklisch den Referenzschwingkreis (403) mit der Elektronikeinheit (101) verbindet und eine Kompensation eines Temperaturgangs der Elektronikeinheit (101) vornimmt.

8. Impedanzsensor (100) gemäß einem der vorhergehenden Ansprüche,
**dadurch gekennzeichnet, dass** der Referenzschwingkreis (403) eine Resonanzfrequenz in einem Arbeitsbereich des Messschwingkreises aufweist.

9. Verfahren zum Betreiben eines Impedanzsensors (100) gemäß einem der vorhergehenden Ansprüche mit folgenden Schritten:
i) Anregen des Referenzschwingkreises (403) und Detektieren einer Frequenzantwort
ii) Vergleichen der Frequenzantwort des Referenzschwingkreises (403) mit einer abgespeicherten Frequenzantwort und Ermitteln eines Offsets
iii) Anregen des Messschwingkreises und Detektieren einer Frequenzantwort
iv) Kompensieren der Frequenzantwort des Messschwingkreises um den ermittelten Offset.

10. Verfahren gemäß Anspruch 9,
**dadurch gekennzeichnet, dass** Schritt i) wenigstens einmal pro Minute, vorzugsweise, wenigstens einmal pro 10 Sekunden, weiter vorzugsweis wenigstens einmal pro Sekunde und weiter bevorzugt jedes Mal vor Schritt iii) durchgeführt wird.

11. Verfahren gemäß einem der Ansprüche 9 oder 10,
**dadurch gekennzeichnet, dass** Schritt i) das Anregen des Referenzschwingkreises (403) mit einem Frequenzsweep über einen Messbereich des Messschwingkreises erfolgt.

12. Verfahren gemäß Anspruch 11,
**dadurch gekennzeichnet, dass** Schritt i) das Verstimmen des Referenzschwingkreises (403) von einer unteren möglichen Messfrequenz bis zu einer oberen möglichen Messfrequenz sowie das Detektieren eines frequenzabhängigen Offsets umfasst.

13. Verfahren gemäß einem der Ansprüche 9 bis 12,
**dadurch gekennzeichnet, dass** Schritt i) das Ermitteln eines Frequenzoffsets und eines Amplitudenoffsets der Frequenzantwort umfasst.

## Claims

1. An impedance sensor (100) with
- a measuring probe (102) that can be influenced in a capacitance by a medium surrounding the measuring probe (102),
- a measuring resonant circuit in which the measuring probe (102) is disposed as a capacitance-determining element,
- an electronic unit (101) with a signal generator (103) for exciting the measuring resonant circuit and a signal detector (104) for determining a response signal of the measuring resonant circuit,
- a signal processing unit (105) connected to the electronic unit (101), and
- a reference circuit
**characterized in that** the electronic unit (101) can be alternately connected to the measuring resonant circuit or the reference circuit, wherein the reference circuit is configured as a temperature-stable reference resonant circuit (403).

2. The impedance sensor (100) according to claim 1,
**characterized in that** the measuring resonant circuit is configured as a serial resonant circuit comprised of the measuring probe (102) and a discrete inductance (109).

3. The impedance sensor (100) according to claim 2,
**characterized in that** the reference resonant circuit (403) has an adjustable resonant frequency.

4. The impedance sensor (100) according to any one of the preceding claims,
**characterized in that** the reference resonant circuit (403) has an inductance (109) corresponding to that of the measuring resonant circuit.

5. The impedance sensor (100) according to any one of the preceding claims,
**characterized in that** the electronic unit (101) can be connected either to the measuring resonant circuit or the reference resonant circuit (403) via a switching device (404).

6. The impedance sensor (100) according to claim 5,
**characterized in that** the switching device (404) is configured as an RF switch (404).

7. The impedance sensor (100) according to any one of the preceding claims,
**characterized in that** the electronic unit (101) is connected to a compensation unit that cyclically connects the reference resonant circuit (403) to the electronic unit (101) and carries out a compensation for a temperature-related behavior of the electronic unit (101).

8. The impedance sensor (100) according to any one of the preceding claims,
**characterized in that** the reference resonant circuit (403) has a resonant frequency in an operating range of the measuring resonant circuit.

9. A method for operating an impedance sensor (100) according to any one of the preceding claims, with the following steps:
i) exciting the reference resonant circuit (403) and detecting a frequency response,
ii) comparing the frequency response of the reference resonant circuit (403) with a stored frequency response and determining an offset,
iii) exciting the measuring resonant circuit and detecting a frequency response,
iv) compensating the frequency response of the measuring resonant circuit by the determined offset.

10. The method according to claim 9,
**characterized in that** step i) is carried out at least once per minute, preferably once per 10 seconds, more preferably at least once per second, and more preferably every time prior to step iii).

11. The method according to any one of the claims 9 or 10,
**characterized in that** in step i), the reference resonant circuit (403) is excited with a frequency sweep across a measuring range of the measuring resonant circuit.

12. The method according to claim 11,
**characterized in that** step i) includes detuning the reference resonant circuit (403) from a lower possible measuring frequency to an upper possible measuring frequency and detecting the frequency-dependent offset.

13. The method according to any one of the claims 9 to 12,
**characterized in that** step i) includes determining a frequency offset and an amplitude offset of the frequency response.

## Revendications

1. Capteur d'impédance (100) comprenant
- une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (101) ayant un générateur de signaux (103) destiné à exciter le circuit résonant de mesure ainsi qu'un détecteur de signaux (104) destiné à déterminer un signal de réponse du circuit résonant de mesure,
- unité de traitement de signaux (105) qui est connectée à l'unité électronique (101), et
- un circuit de référence
**caractérisé par le fait que** l'unité électronique (101) peut être connectée en alternance au circuit résonant de mesure ou au circuit de référence, dans lequel le circuit de référence est conçu en tant que circuit résonant de référence (403) stable en température.

2. Capteur d'impédance (100) selon la revendication 1, **caractérisé par le fait que** le circuit résonant de mesure est réalisé en tant que circuit résonant série à partir de la sonde de mesure (102) et d'une inductance discrète (109).

3. Capteur d'impédance (100) selon la revendication 2, **caractérisé par le fait que** le circuit résonant de référence (403) présente une fréquence de résonance réglable.

4. Capteur d'impédance (100) selon l'une quelconque des revendications précédentes, **caractérisé par le fait que** le circuit résonant de référence (403) présente une inductance (109) qui correspond à celle du circuit résonant de mesure.

5. Capteur d'impédance (100) selon l'une quelconque des revendications précédentes, **caractérisé par le fait que** l'unité électronique (101) peut être connectée via un dispositif de commutation (404) soit au circuit résonant de mesure soit au circuit résonant de référence (403).

6. Capteur d'impédance (100) selon la revendication 5, **caractérisé par le fait que** le dispositif de commutation (404) est conçu en tant que commutateur HF (404).

7. Capteur d'impédance (100) selon l'une quelconque des revendications précédentes, **caractérisé par le fait que** l'unité électronique (101) est reliée à une unité de compensation qui relie cycliquement le circuit résonant de référence (403) à l'unité électronique (101) et met en œuvre une compensation d'une réponse en température de l'unité électronique (101).

8. Capteur d'impédance (100) selon l'une quelconque des revendications précédentes, **caractérisé par le fait que** le circuit résonant de référence (403) présente une fréquence de résonance dans une plage de travail du circuit résonant de mesure.

9. Procédé destiné à faire fonctionner un capteur d'impédance (100) selon l'une quelconque des revendications précédentes, **caractérisé par** les étapes suivantes consistant à:
i) exciter le circuit résonant de référence (403) et détecter une réponse en fréquence
ii) comparer la réponse en fréquence du circuit résonant de référence (403) à une réponse en fréquence mémorisée et déterminer un décalage,
iii) exciter le circuit résonant de mesure et détecter une réponse en fréquence
iv) compenser la réponse en fréquence du circuit résonant de mesure par le décalage déterminé.

10. Procédé selon la revendication 9, **caractérisé par le fait que** l'étape i) est mise en œuvre au moins une fois par minute, de préférence au moins une fois toutes les 10 secondes, plus préférentiellement au moins une fois par seconde et plus préférentiellement à chaque fois avant l'étape iii).

11. Procédé selon l'une quelconque des revendications 9 ou 10, **caractérisé par le fait que** l'étape i) l'excitation du circuit résonant de référence (403) s'effectue avec un balayage en fréquence sur une plage de mesure du circuit résonant de mesure.

12. Procédé selon la revendication 11, **caractérisé par le fait que** l'étape i) comprend le désaccord du circuit résonant de référence (403) d'une fréquence de mesure inférieure possible à une fréquence de mesure supérieure possible ainsi que la détection d'un décalage dépendant de la fréquence.

13. Procédé selon l'une quelconque des revendications 9 à 12, **caractérisé par le fait que** l'étape i) comprend la détermination d'un décalage en fréquence et d'un décalage en amplitude de la réponse en fréquence.
